Europäisches Patentamt

European Patent Office

Office européen des brevets

(11) Publication number: **0 054 579**
**B1**

(12) **EUROPEAN PATENT SPECIFICATION**

(45) Date of publication of patent specification: **24.04.85**

(21) Application number: **80108064.9**

(22) Date of filing: **19.12.80**

(51) Int. Cl.⁴: **H 01 M 2/02**

(54) **Battery assemblage.**

(43) Date of publication of application:
**30.06.82 Bulletin 82/26**

(45) Publication of the grant of the patent:
**24.04.85 Bulletin 85/17**

(84) Designated Contracting States:
**AT BE CH DE FR GB IT LI LU NL SE**

(56) References cited:
**DE-A-2 136 749**
**FR-A-1 337 256**
**FR-A-2 058 740**
**FR-A-2 156 642**
**GB-A- 743 215**
**GB-A- 840 476**
**NL-A-6 906 053**
**US-A-3 338 452**

(73) Proprietor: **Mejia-Arango, Santiago**
**Bogota, D.E. (CO)**

(72) Inventor: **Mejia-Arango, Santiago**
**Bogota, D.E. (CO)**

(74) Representative: **Lederer, Franz, Dr. et al**
**Patentanwälte Dr. Lederer Franz Meyer-Roxlau**
**Reiner F. Lucile-Grahn-Strasse 22**
**D-8000 München 80 (DE)**

**The file contains technical information
submitted after the application was filed and
not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is concerned with a battery assemblage, in particular with a casing for modular batteries.

It is well known, that in this century there has been a great deal of research work concerning a way to store electric energy for subsequent use within generally small units.

There are four (4) documents which relate to batteries formed from interlocking cells connected by dove-tail ribs, and which I consider relevant for this application (1) NL—A—6 906 053; (2) GB—A—840 476; (3) US—A—3 338 452; (4) GB—A—743 215.

The classic way has been in general, a one piece battery for 6 to 12 volts with two terminals. Because it is a one piece unit, this battery has several problems, for example: i) When only one cell is broken down, it is necessary to replace the whole unit, since repair is difficult and expensive. ii) A high percentage of these batteries are lost due to quality control at the manufacturing plants, since during the manufacturing process one of the cells that make up the battery is likely to fail and not work properly. iii) Casting molds for the manufacture of casings are very expensive.

The above mentioned problems have been solved by the provision of batteries constituted by an assemblage of rigidly interconnectable separate cells as disclosed in documents (1) to (4), such assemblages having the advantages specified on page 4. The present invention relates to an assemblage of such type.

The battery assemblage of this invention comprises a series of removable and coupling elements, rigidly interengaged by means of a combination of head couplings in vertical and horizontal orientations, the battery further consisting of:

a) cells or receptacles, with male and female head couplings at their corners, extending vertically along the length of each cell;

b) two metal terminals projecting from each cell at the top extremes of its cover, with a central opening for receiving electrolytic liquids;

c) metal connectors, electrically connecting two adjacent cells by means of threaded screws;

d) two protectors, one long and one short in "U" shape in order to cover two rows of connectors of the assembled battery, functioning as coupling heads in horizontal orientation, said protectors also having slots which engage with the projecting tongues of the connectors, in order to provide rigid interengagement of the cells in the horizontal orientation.

Preferably the cell carries ribs of variable width inside, with the wider rib having the female head coupling, progressively diminishing until it reaches the narrowest portion at the end where the male head coupling is located. The metal connectors which electrically join the terminals are provided with projecting tongues engaging the slots of protectors when constructed over the same. Suitably the long protector has round holes at its ends.

In one embodiment of the present invention, the battery consists of two assembled pieces, removable and intercoupling, which are as follows:

Cells or receptacles containing electrolytic fluid and lead plates, either low or high, with capacity for supplying 2 volts. In their corners, each cell has male and female dovetail couplings, antimetrically opposed, carried vertically along the length of the cell, in order to obtain proper orientation of the cell for connecting electrical terminals either in series or in parallel. Furthermore, dovetail couplings provide good rigidity to the battery due to their length.

There are ribs disposed within the cells for adequate separation and adjustment of lead plates, whereby said plates may be placed diagonally in relation to the cell, making the most use of the space available without enlarging the dimensions of standard conventional batteries. Metal connections join electrically projecting terminals of two adjacent cells by means of threaded screws axially introduced in terminals, allowing ease for replacement of any cell not working properly.

These corrective plates have a projecting flange around their periphery for engaging ribs in corresponding slots therein when the battery is assembled.

Protectors in "U" form for covering the battery connectors when assembled, also function as head couplings in horizontal orientation for better rigidity of the whole.

The longest of these protectors projects somewhat from the battery with round holes at its ends for fixing the battery in place on its base.

This new battery has better rigidity of the whole in addition to the advantages common to batteries assembled from separate cells such as:

— Any desired voltage may be obtained, simply by adding several cells either in series or in parallel.

— The assembled battery for 6 or for 12 volts has standard dimensions for conventional cars.

— Quality control becomes simpler, since it is performed on each one of the cells, so that only those in good conditions reach the final battery.

— Under normal conditions of use, any defective cell may be replaced without changing the whole battery.

— Casting molds for cell manufacture are much cheaper than those used for the manufacture of conventional batteries.

Brief description of the drawings

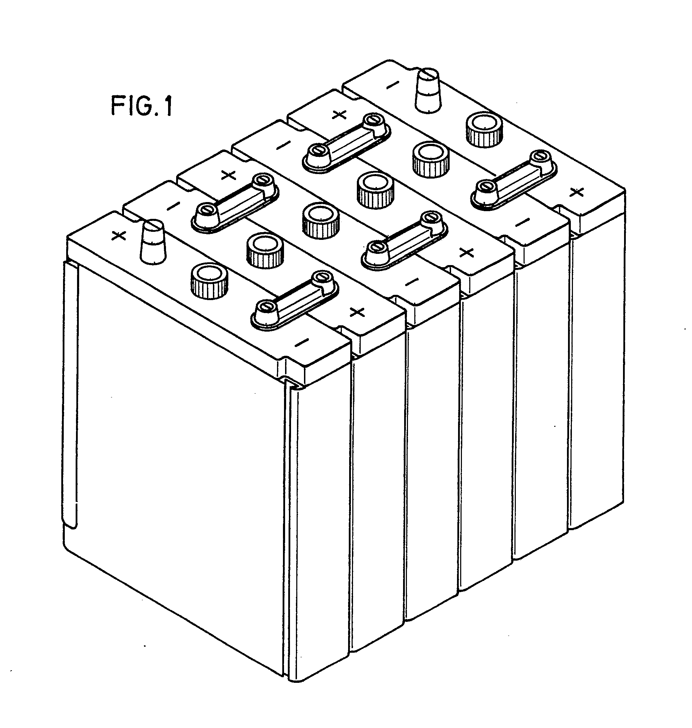

Figure 1 is a perspective view of 12-volt Battery formed by the connection of 6 2-volt separate cells, without protectors.

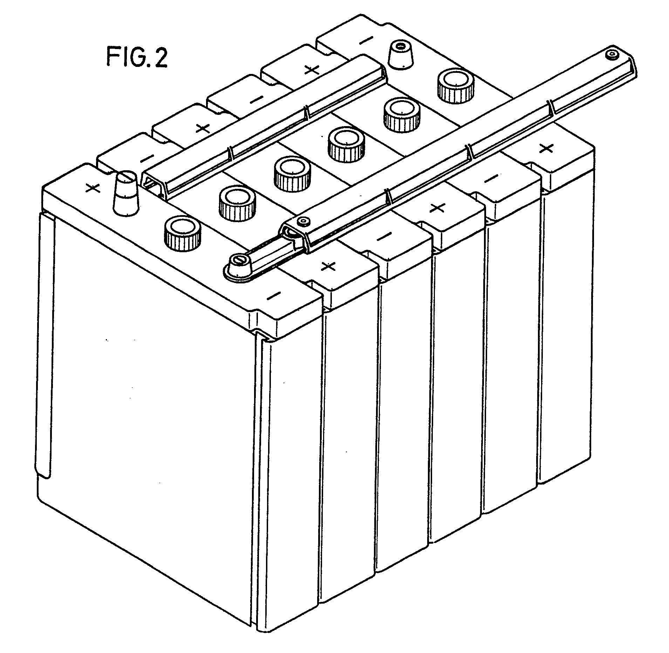

Figure 2 is a perspective view of 12-volt Battery formed by the connection of 6 2-volt separate cells with protectors.

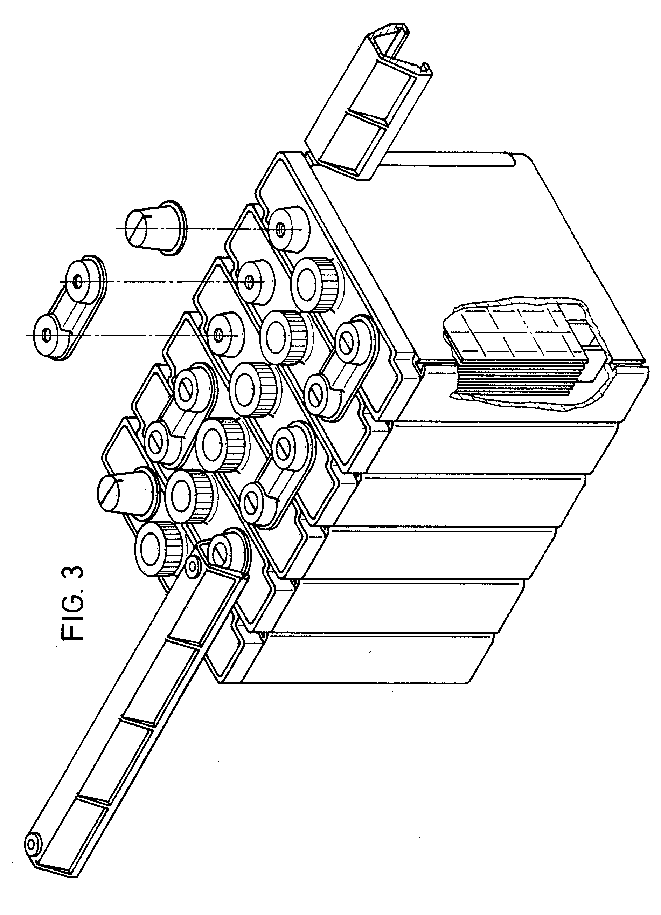

Figure 3 is a perspective view of 12-volt Battery formed by the connection of 6 2-volt separate cells, showing placement of protectors, metal connectors and terminals.

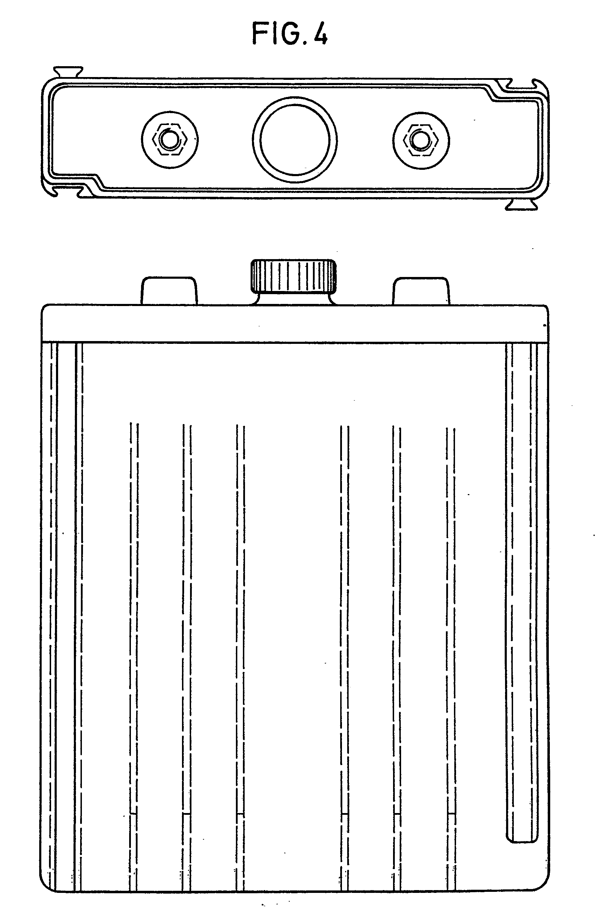

Figure 4 shows Top and Front elevation views of a 2-volt cell, showing Battery caps and metal terminals.

**Claims**

1. Battery assemblage which comprises:

a) a series of removable cells the receptables of which are provided with male and female head couplings at their corners, extending vertically along the length of each cell whereby the cells are rigidly interengaged in vertical orientation;

b) two metal terminals projecting from each cell at the top extremes of its cover, with a central opening for receiving electrolytic liquids; and

c) metal connectors, electrically connecting two adjacent cells by means of threaded screws; characterized in that said metal connectors are provided with projecting tongues and in that the assemblage is further provided with two protectors, one long and one short, of "U" shape in order to cover two rows of connectors of the assembled battery, said protectors also having slots which engage with the projecting tongues of the connectors to provide rigid interengagement of the cells in the horizontal orientation.

2. The assemblage of Claim 1 wherein the long protector projects somewhat from the battery with round holes at its ends for fixing the battery in place on its base.

**Patentansprüche**

1. Batterieanordnung mit

a) einer Serie von entfernbaren Zellen, deren Behälter an ihren Kanten mit vorspringenden und einspringenden, vertikale über die Länge der Zellen sich erstreckenden Kupplungselementen versehen sind, so dass die Zellen in vertikaler Orientierung starr aneinander gekoppelt sind,

b) zwei metallenen Anschlüssen, die über die obere Abdeckung jeder Zelle vorstehen, einer zentralen Oeffnung zur Aufnahme von Elektrolytflüssigkeiten, und mit

c) metallischen Verhindungselementen, die zwei benachbarte Zellen mittels Schrauben elektrisch verbinden, dadurch gekennzeichnet, dass die metallischen Verbindungselemente mit abstehenden Zungen versehen sind und dass die Anordnung eine längere und eine kürzere, U-förmige Schutzleiste aufweist, um zwei Reihen von Anschlüssen in der zusammengestellten Batterie abzudecken, wobei die Schutzleisten mit Schlitzen versehen sind, in die die Abstehenden Zungen der Verbindungselemente eingreifen, um die Zellen in horizontaler Orientierung starr aneinander zu koppeln.

2. Batterieanordnung nach Anspruch 1, dadurch gekennzeichnet, dass die längere Schutzleiste etwas über die Zellenbatterie vorsteht und an ihren Enden mit runden Löchern versehen ist, um die Zellenbatterie auf ihrer Standfläche zu fixieren.

**Revendications**

1. Assemblage de batterie comprenant:

a) une série d'éléments séparables dont les bacs sont munis, à leurs angles, de rails d'assemblage mâles et femelles s'étendant verticalement sur la longuer de chaque élément, ce qui fait que les éléments sont assemblés rigidement entre eux par emboîtement en direction verticale;

b) deux bornes de métal, en saillie sur chaque élément sur le dessus et aux extrémités de son couvercle, ainsi qu'une ouverture centrale destinée à recevoir des électrolytes liquides; et

c) des connecteurs métalliques, reliant électriquement deux éléments voisins au moyen de vis filetées, caractérisé en ce que les connecteurs métalliques sont munis de languettes saillantes et en ce que le dispositif comprend en outre deux protecteurs profilés en "U", l'un court et l'autre long, destinés à recouvrir deux rangées de connecteurs de la batterie assemblée, ces protecteurs comportant également des rainures qui sont en prise avec les languettes saillantes des connecteurs, afin d'assurer un assemblage rigide des éléments entre eux par emboîtement en direction horizontale.

2. Assemblage selon la revendication 1, dans lequel le protecteur long fait quelque peu saillie sur la batterie et comporte, à ses extrémités, ses trous ronds servant à la fixation de la batterie en place sur son socle.

FIG.1

FIG.2

FIG. 3

# FIG. 4